# EUROPEAN PATENT APPLICATION

(11) **EP 3 868 479 A1**
(43) Date of publication of application: **25.08.2021**
(21) Application number: 21167228.2
(22) Date of filing: 27.03.2020
(51) Int. Cl.: B05B 9/08, B05B 15/628, B05B 15/63, F16K 24/00, B65D 51/16, F16K 24/06

(54) **GRAVITY POWERED SPRAYER**

(30) Priority: 27.03.2019 US 201962824664 P
(62) Divisional of application: 20166369.7
(71) Applicant: The Fountainhead Group, Inc., New York Mills, New York 13417-1318 (US)
(72) Inventor: Denmat, David, CLINTON, NY 13323 (US); Bonaventura, Jason, ONEIDA, NY 13421 (US)
(74) Representative: DREISS Patentanwälte PartG mbB

(57) **Abstract**

A sprayer that produces the pressure for a fluid spray without the requirement of mechanical energy in the form of a manual or battery-powered compressor or fluid pump. The sprayer utilizes a handle and vent system incorporated into the bottle and a shut-off placed at the nozzle of a telescoping wand which work together to enable atmospheric pressure to produce the intended fluid flow and spray, and yet also employ a needed closed system to contain the fluid.

## Description

### Cross Reference to Related Application

The present application relates and claims priority to United States Provisional Application No. 62/824,664, filed March 27, 2019, the entirety of which is hereby incorporated by reference.

### Field of the Invention

The present disclosure is directed generally to lawn and garden sprayers, and more particularly to the design of the bottle in which the liquid to be dispensed is contained.

### Background

A typical lawn and garden sprayer requires mechanical energy in the form of either compressed air (e.g., manual hand pump-up or motorized compressors) or positive fluid displacement (e.g., manual hand trigger or motorized fluid pumps) in order to produce enough pressure to result in a fluid spray. The typical sprayer also requires a "closed" system that contains the fluid in order to prevent leaks, spills, and unintended dispensing during transport, operation, and storage.

Accordingly, there is a need in the art for a sprayer in which the pressure for a fluid spray is produced without the requirement of mechanical energy in the form of a manual or battery-powered compressor or fluid pump.

### Summary

The present disclosure is directed to a sprayer that produces the pressure for a fluid spray without the requirement of mechanical energy in the form of a manual or battery-powered compressor or fluid pump. The sprayer utilizes a handle and vent system incorporated into the bottle and a shut-off placed at the nozzle of a telescoping wand which work together to enable atmospheric pressure to produce the intended fluid flow and spray, and yet also employ a needed closed system to contain the fluid.

According to an aspect is a bottle for containing liquid and for use in combination with a spray wand connected to the bottle and from which liquid in the bottle may be dispensed, the bottle comprising a top surface having a vent opening formed therethrough, a bottom surface spaced from the top surface, front and rear surfaces extending between the top surface and the bottom surface, and opposing side surfaces extending between the top surface and the bottom surface and between the front surface and the rear surface; the rear surface extending in a first plane and the front surface extending in a second plane that forms an acute angle with respect to the first plane; a handle integrated with the rear surface, the handle extending along an axis that is parallel to the second plane; an outlet formed on the top surface adjacent the front surface; and a vent assembly incorporated into the vent opening and positioned adjacent the rear surface and comprising a neck that extends upwardly from the top surface.

According to an embodiment, the bottle further comprises a wand holster attached in covering relation to a portion of the top surface and the rear surface, the wand holster comprising an opening formed therethrough and through which the neck extends.

According to an embodiment, the wand holster further comprises a hook formed thereon.

According to an embodiment, the vent module further comprises a cap that engages the threaded neck and covers the vent opening; a cap seal positioned between the cap and the top edge of the threaded neck; a housing positioned within the vent opening and comprising a central post, a recess formed circumferentially around the post, a floor through which an air gap is formed; and an upstanding sidewall extending upwardly from the floor; a spring positioned around the central post; a flexible diaphragm positioned around the central post and extending outwardly in sealed relation against the upstanding sidewall; and a spring disc positioned in bearing relation between the diaphragm and the spring; the cap further comprising an interior flange that secures the diaphragm; wherein the diaphragm is flexibly movable between a first position that permits air to flow into the bottle and a second position that prevents air flow into or out of the bottle.

According to an aspect is a bottle for containing liquid and for use in combination with a spray wand connected to the bottle and from which liquid in the bottle may be dispensed, the bottle comprising a vent opening formed through the bottle; and a vent assembly comprising: a cap that covers the vent opening; a cap seal positioned in sealed relation to the cap; a housing positioned within the vent opening and comprising a central post, a recess formed circumferentially around the post, a floor through which an air gap is formed; and an upstanding sidewall extending upwardly from the floor; a spring positioned around the central post; a flexible diaphragm positioned around the central post and extending outwardly in sealed relation against the upstanding sidewall; and a spring disc positioned in bearing relation between the diaphragm and the spring; the cap further comprising an interior flange that secures the diaphragm; wherein the diaphragm is flexibly movable between a first position that permits air to flow into the bottle and a second position that prevents air flow into or out of the bottle.

According to an aspect is a liquid sprayer, comprising a spray wand through which the liquid may pass and from which the liquid may be expelled; and a bottle for containing the liquid and for use in combination with the spray wand that may be connected to the bottle and from which liquid in the bottle may be dispensed, the bottle comprising a top surface having a vent opening formed therethrough, a bottom surface spaced from the top surface, front and rear surfaces extending between the top surface and the bottom surface, and opposing side surfaces extending between the top surface and the bottom surface and between the front surface and the rear surface, wherein the rear surface extends along a first axis and the front surface extends along a second axis that forms an acute angle with the first axis.

According to an embodiment the sprayer further comprises a handle integrated with the rear surface.

According to an embodiment the sprayer further comprises an outlet formed on the top surface adjacent the front surface.

According to an embodiment the sprayer further comprises a vent assembly incorporated into the vent opening and positioned adjacent the rear surface and comprising a neck that extends upwardly from the top surface.

According to an embodiment the vent assembly further comprises a cap that engages the threaded neck and covers the vent opening; a cap seal positioned between the cap and the top edge of the threaded neck; a housing positioned within the vent opening and comprising a central post, a recess formed circumferentially around the post, a floor through which an air gap is formed; and an upstanding sidewall extending upwardly from the floor; a spring positioned around the central post; a flexible diaphragm positioned around the central post and extending outwardly in sealed relation against the upstanding sidewall; and a spring disc positioned in bearing relation between the diaphragm and the spring; the cap further comprising an interior flange that secures the diaphragm; wherein the diaphragm is flexibly movable between a first position that permits air to flow into the bottle and a second position that prevents air flow into or out of the bottle.

According to an embodiment the sprayer further comprises a wand holster attached in covering relation to a portion of the top surface and the rear surface, the wand holster comprising an opening formed therethrough and through which the neck extends.

According to an embodiment the wand holster further comprises a hook formed thereon.

According to an embodiment the wand holster further comprises a hose receiving recess formed therein.

According to an embodiment the handle extends along an axis that is parallel to the second axis.

These and other aspects of the invention will be apparent from the embodiments described below.

### Brief Description of the Drawings

The present invention will be more fully understood and appreciated by reading the following Detailed Description in conjunction with the accompanying drawings, in which:
FIG. 1 is a side elevation view of a gravity powered sprayer, in accordance with an embodiment.
FIG. 2 is rear elevation view of a gravity powered sprayer, in accordance with an embodiment.
FIG. 3 is a perspective view of a gravity powered sprayer, in accordance with an embodiment, with a section line 5-5 shown thereon.
FIG. 4 is a perspective view of a gravity powered sprayer, in accordance with an embodiment, with section lines 7-7, 8-8, 9-9, and 10-10 shown thereon.
FIG. 5 is an enlarged view taken at section 5-5 of FIG. 3, in accordance with an embodiment, and with a section line 6-6 shown thereon.
FIG. 6 is an enlarged view taken at section 6-6 of FIG. 5, in accordance with an embodiment.
FIG. 7 is an enlarged view taken at section 7-7 of FIG. 4, in accordance with an embodiment.
FIG. 8 is an enlarged view taken at section 8-8 of FIG. 4, in accordance with an embodiment.
FIG. 9 is an enlarged view taken at section 9-9 of FIG. 4, in accordance with an embodiment.
FIG. 10 is an enlarged view taken at section 10-10 of FIG. 4, in accordance with an embodiment.

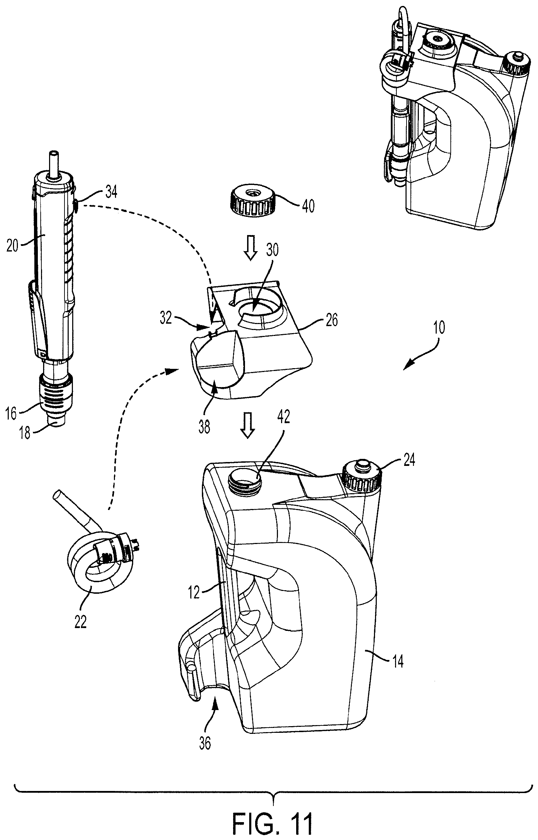

FIG. 11 is an exploded perspective view of a gravity powered sprayer, in accordance with an embodiment.
FIG. 12 is a side elevation view of a gravity powered sprayer, in accordance with an embodiment, and illustrating fluid level within the bottle when in the storage orientation.
FIG. 13 is a perspective view of a gravity powered sprayer in its in-use orientation, in accordance with an embodiment.
FIG. 14 is a side elevation view of a gravity powered sprayer in its in-use position illustrating the angled cant of the bottle when in-use, in accordance with an embodiment.
FIG. 15 is a side elevation view of a gravity powered sprayer in its in-use position and illustrating the elevation of the fluid level above the outlet nozzle, in accordance with an embodiment.
FIG.' S 16A and 16B are perspective view of the bottle and a sectional view of the vent assembly of a gravity powered sprayer, in accordance with an embodiment.
FIG. 17 is a sectional view of the vent assembly when the bottle is in a vertical orientation, in accordance with an embodiment.
FIG. 18 is a sectional view of the vent assembly showing the diaphragm closing against the seal feature, in accordance with an embodiment.
FIG. 19 is a sectional view of the vent assembly showing the air flow when the shut-off is open with fluid flowing from the bottle, in accordance with an embodiment.
FIG. 20 is a perspective view of a gravity powered sprayer, in accordance with an embodiment.

### Detailed Description of Embodiments

The present disclosure describes a system that produces the pressure for a fluid spray without the requirement of mechanical energy in the form of a manual or battery-powered compressor or fluid pump.

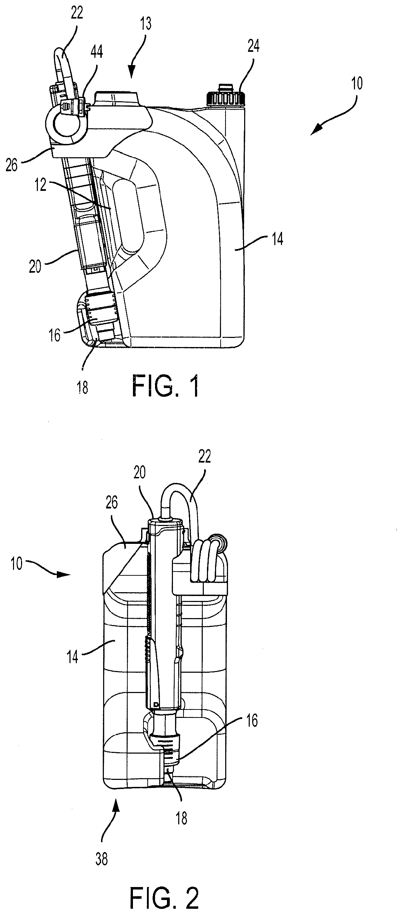

Referring to FIG. 1, in one embodiment, a sprayer, designated generally by reference numeral 10, utilizes a handle 12 and vent assembly 13 (to be described hereinafter) incorporated into a bottle 14 and a shut-off 16 placed adjacent the outlet nozzle 18 of a telescoping wand 20 all of which work together to enable atmospheric pressure to produce the intended fluid flow and spray, and yet also employ a needed closed system to contain the fluid. In order to enable atmospheric pressure to initiate (or prime) flow during operation, the nozzle (outlet) 18 and entire hose 22 that connects wand 20 to bottle 14 must be positioned below the level of the fluid in the bottle 14. Once the sprayer 10 is primed (all air evacuated from the hose 22 and wand 20), only the nozzle 18 needs to be positioned below the fluid level for flow to initiate or continue. The greater the elevation of the bottle's fluid level above the nozzle 18 (i.e., the greater the head pressure), the greater the resulting fluid flow and spray from the nozzle 18. The sprayer 10 is designed as a system that utilizes atmospheric pressure to enable fluids to be effectively and accurately sprayed or dispensed on ground-level applications within building and lawn and garden environments.

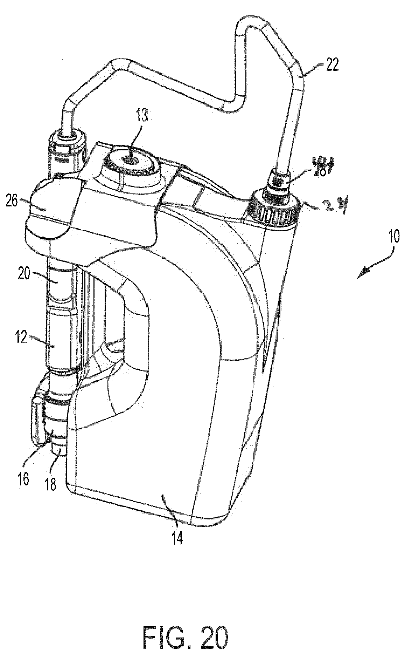

Referring to FIG. 1, the essential components of sprayer 10 are the bottle 14, bottle vent assembly 13, outlet cap 24, wand holster 26, wand 20, and hose 22 and outlet connector 44. In FIG.'S 1 and 2, bottle 10 is shown in its on-shelf packaging configuration where it is oriented with vent assembly 13 and outlet connector 44 on top; in FIG.'s 13-15, bottle 10 is shown in its in-use configuration where handle 12 is gripped such that it extends in a horizontal direction with the bottle 10 canted at a slightly downwardly directed angle; FIG. 20 shows bottle 10 in its user-stored configuration (after it has been used at least once) which is vertically oriented, but with the hose 22 extending between wand 20 and outlet connector 44 (once outlet connector 44 is attached to outlet cap 24, it remains connected).

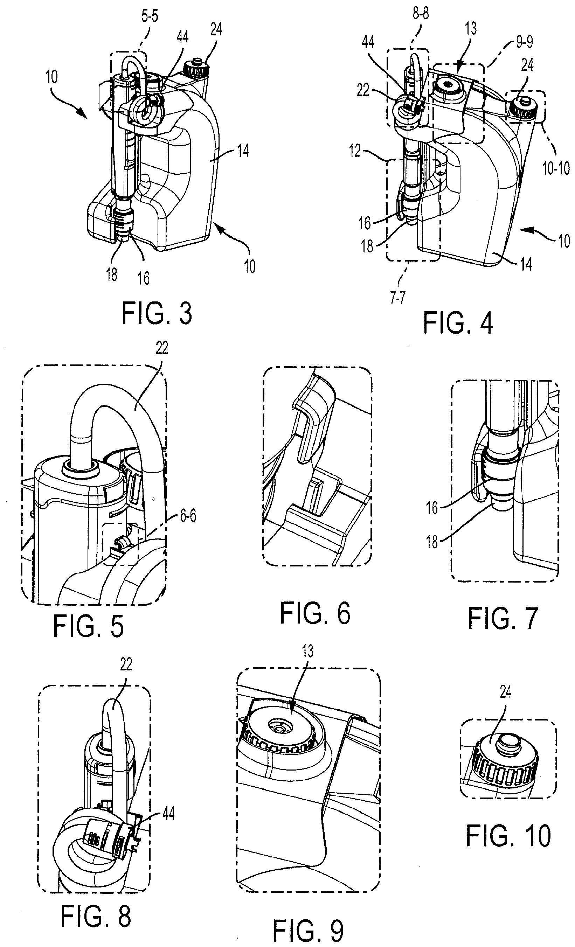

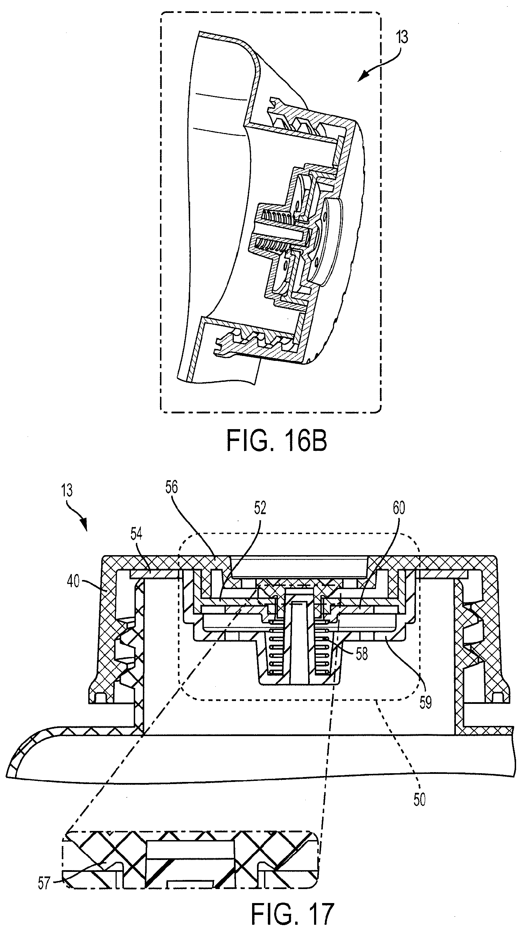

The holster 26, in combination with the bottle 14, provides storage utility for both on-shelf packaging and user storage. Referring to FIG'S. 5, 6, and 11, holster 26 comprises a body that fits in covering relation over a portion of the top surface of bottle 14; an opening 30 through which vent assembly 13 (see FIG. 17) can pass; a hook and slot combination 32 that cooperatively receive a hook 34 formed on wand 20 to permit wand 20 to securely attach thereto (and, for that purpose, bottle 14 includes a cradle 36 formed therein that receives the nozzle end of wand 20 when it is being stored, as seen in FIG. 7); and a recess 38 formed therein that receives hose 22 and connector 44 for in-store packaging storage as seen in FIG. 8. A vent cap 40 screws onto the threaded neck 42 of vent assembly 13 that passes through opening 30 and holds/pinches holster 26 in position on bottle 14, as seen in FIG. 9.

Bottle 14 is functionally designed to enable atmospheric pressure to produce the desired fluid flow and spray. During both on-shelf packaging and user storage, bottle 14 is placed with a vertical orientation. Vent cap 40 and hose outlet cap 24 are optimally located at the top of the bottle 14 (when vertically oriented) and positioned above and within the airspace, which minimizes the possibility of inadvertent fluid leaks. In addition, during both on-shelf packaging and user storage, the location orientation of the wand 20 is aligned in parallel with the bottle's handle 12 to permit the user to comfortably grasp and transport the entire sprayer 10 with one hand.

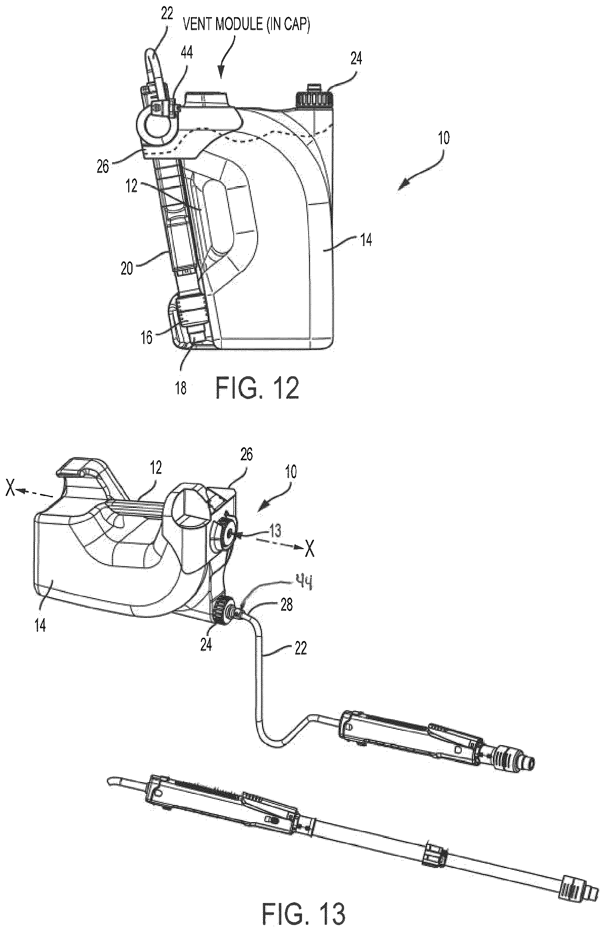

With reference to Figure 13, for use in a spraying operation, bottle 14 is held by its handle 12 in a generally horizontal orientation along axis X-X. Wand 20 is removed from the holster 26, and hose 22 is (one-time) attached to outlet cap 24 via its outlet/hose connector 44. With wand 20 extended, the user now holds bottle 14 via its handle 12 in a comfortable horizontal orientation along axis X-X in order to operate the wand 20 with his/her other hand.

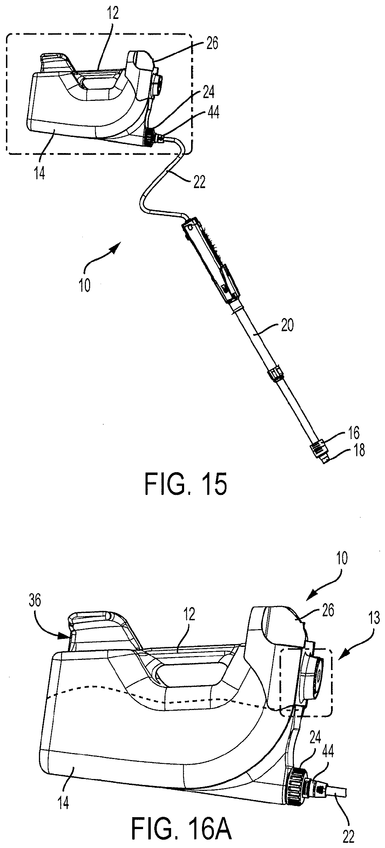

As generally see in FIG. 15, handle 12 is formed in bottle 14 such that it includes a recess that aids in producing fluid flow by increasing the relative elevation of the fluid level in the hand-held bottle 14 with respect to the lower nozzle fluid outlet 18 at the end of the hand-held wand 20.

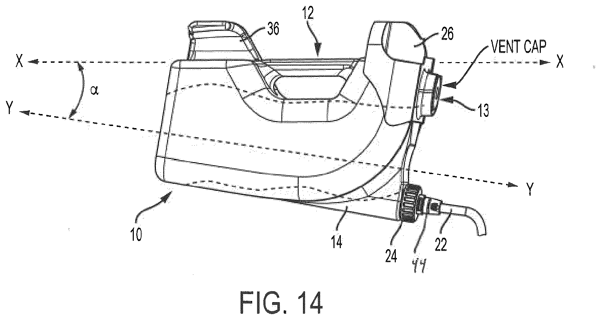

As generally see in FIG. 14, the downward angled "cant" of the bottle 14 that extends along axis Y-Y that intersects axis X-X at an acute angle α aids in directing fluid to the outlet. Note that during storage the outlet 24 is in the airspace above the fluid level, and that during operation the outlet 24 then becomes positioned at the very bottom of the fluid level to facilitate flow.

The location of the vent assembly 13 on the bottle 14 serves to optimize the vent function by nominally keeping the vent within the airspace (above fluid level) always. It is worth noting that the vent is designed with a capability to operate while submerged (below fluid level).

Referring to FIG.'s 4, 9, 16B, and 17, the vent assembly 13 comprises a modular housing assembly 50 that contains a spring-loaded flexible diaphragm 52 held in sealing relationship to vent frame 56 and housing 59, and which is acted on by spring 58 and spring disc 60 to operate against a seal feature 57. The seal function provided by this assembly 13 serves as a check valve that permits air to enter the bottle 14 but prevents fluid from seeping or leaking from the bottle 14. In this embodiment, the vent housing assembly 50 is incorporated for attachment to the bottle 14 via a sealed cap 40, but the modular vent assembly 13 may also be attached to the bottle 14 by other means (not shown) such as direct insertion into the wall of the bottle.

The vent assembly 13 performs two primary functions: 1) in order for flow to initiate, it must allow air to enter the bottle 14 as the shut-off 16 is opened by the user, and 2) it must prevent fluid from seeping out past the vent frame 56 (with a V-shaped seal feature 57) as the shut-off 16 is closed, as during transport, carry, and storage. The vent assembly 13 is shown in FIG.'S 16-19. In operation, the vent sealing function is established when the flexible diaphragm 52 closes against the seal feature 57 of the vent frame 56. With reference to the illustrative dashed "flow" lines in FIG.s 18 - 19 it can be observed how the fluid is prevented from leaking out of the bottle and how the air is allowed to enter into the bottle as the diaphragm 52 closes and opens against that specific V-shaped seal feature 57.

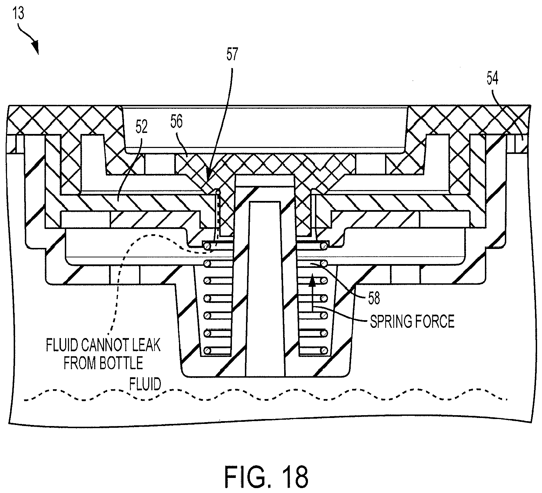

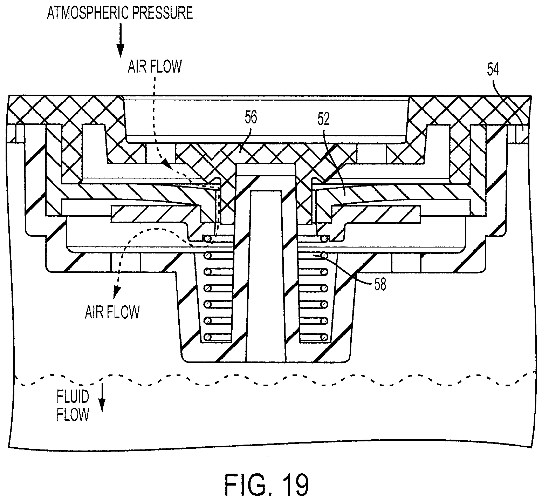

In order to operate and perform as above, the sprayer 10 utilizes this vent assembly 13 for the bottle 14. Flow from the bottle 14 is initiated when the shut-off valve 16 at the wand 20 is opened and fluid flows through tubes down to and out the nozzle 18 at the distal end of the wand 20. The vent assembly 13 permits air to enter the bottle 14 to replace the volume of displaced fluid during flow (reference FIG. 19), and seals fluid within the bottle 14 once the shut-off 16 is closed and flow stops (reference FIG. 18).

This flow from the bottle 14 is produced as a result of the relatively low head pressure formed by the height difference between (waist-high) elevation of the fluid level in the bottle 14 and the (close-to-ground) elevation of the fluid at the nozzle 18 exit point (Reference FIG. 15). The vacuum (pressure drop) formed within the bottle 14 by this flow is utilized to open the normally closed spring-loaded diaphragm 52, permitting air to replace the displaced volume of fluid, enabling flow to continue (reference FIG. 19). When the shut-off 16 is closed, fluid flow stops, the pressure drop goes to zero, and the spring-loaded diaphragm 52 returns to its closed position against the seal feature 57 (reference FIG. 18).

To permit flow at such low head pressure, the vent assembly 13 must be sensitive enough to open at a pressure drop that is a fraction of the available head pressure. For example, a pressure drop of -.25 psi operating against an available 1.00 psi head pressure would produce a resulting flow pressure at .75 psi. The sensitivity of the vent assembly 13 is achieved by balancing the design area of the diaphragm 52 with respect to the closing force of the spring 58.

While various embodiments have been described and illustrated herein, those of ordinary skill in the art will readily envision a variety of other means and/or structures for performing the function and/or obtaining the results and/or one or more of the advantages described herein, and each of such variations and/or modifications is deemed to be within the scope of the embodiments described herein. More generally, those skilled in the art will readily appreciate that all parameters, dimensions, materials, and configurations described herein are meant to be exemplary and that the actual parameters, dimensions, materials, and/or configurations will depend upon the specific application or applications for which the teachings is/are used. Those skilled in the art will recognize or be able to ascertain using no more than routine experimentation, many equivalents to the specific embodiments described herein. It is, therefore, to be understood that the foregoing embodiments are presented by way of example only and that, within the scope of the appended claims and equivalents thereto, embodiments may be practiced otherwise than as specifically described and claimed. Embodiments of the present disclosure are directed to each individual feature, system, article, material, kit, and/or method described herein. In addition, any combination of two or more such features, systems, articles, materials, kits, and/or methods, if such features, systems, articles, materials, kits, and/or methods are not mutually inconsistent, is included within the scope of the present disclosure.

## Claims

1. A bottle for containing liquid and for use in combination with a spray wand connected to the bottle and from which liquid in the bottle may be dispensed, the bottle comprising:
a. a top surface having a vent opening formed therethrough, a bottom surface spaced from the top surface, front and rear surfaces extending between the top surface and the bottom surface, and opposing side surfaces extending between the top surface and the bottom surface and between the front surface and the rear surface;
b. the rear surface extending in a first plane and the front surface extending in a second plane that forms an acute angle with respect to the first plane;
c. a handle integrated with the rear surface;
d. an outlet formed on the top surface adjacent the front surface; and
e. a vent assembly incorporated into the vent opening and positioned adjacent the rear surface and comprising a neck that extends upwardly from the top surface.

2. The bottle according to claim 1, further comprising a wand holster attached in covering relation to a portion of the top surface and the rear surface, the wand holster comprising an opening formed therethrough and through which the neck extends.

3. The bottle according to claim 2, wherein the wand holster further comprises a hook formed thereon.

4. The bottle according to claim 2, wherein the wand holster further comprises a hose receiving recess formed therein.

5. The bottle according to claim 1, wherein the handle extends along an axis that is parallel to the second plane.

6. The bottle according to claim 1, wherein the vent assembly further comprises:
a. a cap that engages the threaded neck and covers the vent opening;
b. a cap seal positioned between the cap and the top edge of the threaded neck;
c. a housing positioned within the vent opening and comprising a central post, a recess formed circumferentially around the post, a floor through which an air gap is formed; and an upstanding sidewall extending upwardly from the floor;
d. a spring positioned around the central post;
e. a flexible diaphragm positioned around the central post and extending outwardly in sealed relation against the upstanding sidewall; and
f. a spring disc positioned in bearing relation between the diaphragm and the spring;
g. the cap further comprising an interior flange that secures the diaphragm;
h. wherein the diaphragm is flexibly movable between a first position that permits air to flow into the bottle and a second position that prevents air flow into or out of the bottle.

7. A bottle for containing liquid and for use in combination with a spray wand connected to the bottle and from which liquid in the bottle may be dispensed, the bottle comprising:
a. a vent opening formed through the bottle; and
b. a vent assembly comprising:
i. a cap that covers the vent opening;
ii. a cap seal positioned in sealed relation to the cap;
iii. a housing positioned within the vent opening and comprising a central post, a recess formed circumferentially around the post, a floor through which an air gap is formed; and an upstanding sidewall extending upwardly from the floor;
iv. a spring positioned around the central post;
v. a flexible diaphragm positioned around the central post and extending outwardly in sealed relation against the upstanding sidewall; and
vi. a spring disc positioned in bearing relation between the diaphragm and the spring;
vii. the cap further comprising an interior flange that secures the diaphragm;
viii. wherein the diaphragm is flexibly movable between a first position that permits air to flow into the bottle and a second position that prevents air flow into or out of the bottle.

8. A liquid sprayer, comprising:
a. a spray wand through which the liquid may pass and from which the liquid may be expelled; and
b. a bottle for containing the liquid and for use in combination with the spray wand that may be connected to the bottle and from which liquid in the bottle may be dispensed, the bottle comprising a top surface having a vent opening formed therethrough, a bottom surface spaced from the top surface, front and rear surfaces extending between the top surface and the bottom surface, and opposing side surfaces extending between the top surface and the bottom surface and between the front surface and the rear surface, wherein the rear surface extends along a first axis and the front surface extends along a second axis that forms an acute angle with the first axis.

9. The liquid sprayer according to claim 8, wherein the bottle further comprises a handle integrated with the rear surface.

10. The liquid sprayer according to claim 8, wherein the bottle further comprises an outlet formed on the top surface adjacent the front surface.

11. The liquid sprayer according to claim 8, wherein the bottle further comprises a vent assembly incorporated into the vent opening and positioned adjacent the rear surface and comprising a neck that extends upwardly from the top surface.

12. The liquid sprayer according to claim 11, wherein the vent assembly further comprises:
a. a cap that engages the threaded neck and covers the vent opening;
b. a cap seal positioned between the cap and the top edge of the threaded neck;
c. a housing positioned within the vent opening and comprising a central post, a recess formed circumferentially around the post, a floor through which an air gap is formed; and an upstanding sidewall extending upwardly from the floor;
d. a spring positioned around the central post;
e. a flexible diaphragm positioned around the central post and extending outwardly in sealed relation against the upstanding sidewall; and
f. a spring disc positioned in bearing relation between the diaphragm and the spring;
g. the cap further comprising an interior flange that secures the diaphragm;
h. wherein the diaphragm is flexibly movable between a first position that permits air to flow into the bottle and a second position that prevents air flow into or out of the bottle.

13. The liquid sprayer according to claim 8, further comprising a wand holster attached in covering relation to a portion of the top surface and the rear surface, the wand holster comprising an opening formed therethrough and through which the neck extends.

14. The liquid sprayer according to claim 13, wherein the wand holster further comprises a hook formed thereon.

15. The liquid sprayer according to claim 8, wherein the handle extends along an axis that is parallel to the second axis.
